# EUROPEAN PATENT APPLICATION

(11) **EP 3 128 677 A1**
(43) Date of publication of application: **08.02.2017**
(21) Application number: 16182595.5
(22) Date of filing: 03.08.2016
(51) Int. Cl.: H04B 1/3888, H04M 1/02, H01M 2/10, A45C 11/00

(54) **PAD FOR PROTECTIVE COVER**

(30) Priority: 05.08.2015 US 201514819130
(71) Applicant: Aevoe International Ltd., Tortola (VG)
(72) Inventor: Chiang, Huai Shun, 238 New Taipei City (TW)
(74) Representative: Holme Patent A/S

(57) **Abstract**

A pad (10) is provided that includes a support portion (100) and a head portion (200). The support portion includes a base portion (102) having at least one aperture (104) formed therein, a ring (106) extending around a surface of the base portion (102) and bridges the at least one aperture (104), and an outer rim (108) that radially extends outward from the base portion (102). The head portion has a first side including at least one protrusion (204) that corresponds to the apertures of the support portion and a second side having a rounded convex surface. The at least one protrusion extends through the corresponding aperture and encompasses a portion of the ring bridging the aperture, thereby coupling the head portion with the support portion. When coupled, the ring (106) separates the support portion (100) and the head portion (200) thereby forming a waist (402).

## Description

### FIELD

The present disclosure relates to a protective cover. In particular, the disclosure relates to a pad for a protective cover for electronic devices.

### BACKGROUND

Protective covers for electronic devices prevent scratches and damage to the electronic devices. Protective covers may have pads to raise the protective cover and electronic device above a surface such as the top of a desk. Raising the electronic device can help dissipate heat. The pads for protective covers are often glued to the underside of the cover.

### SUMMARY OF THE INVENTION

It is a main aspect of the present invention to provide an alternative pad for a protective cover, in particular for electronic devices.

It is yet an aspect of the present invention to provide a protective cover for an electronic device that can protect the device from external damage.

It is yet an aspect of the present invention to provide a pad that can raise an electronic device to improve heat dissipation and prevent concrete, wood, glass, or any hard surface upon which the electronic device is placed from damaging the protective device.

It is yet an aspect of the present invention to provide a pad that can be removably coupled with a protective cover.

The following definitions are used in this disclosure: The term "coupled" is defined as connected, whether directly or indirectly through intervening components, and is not necessarily limited to physical connections. The connection can be such that the objects are permanently connected or releasably connected. The term "substantially" is defined to be essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; "comprising" specifically indicates open-ended inclusion or membership in a so-described combination, group, series and the like.

The novel and unique whereby the above and other aspects are achieved according to the present invention consists in a pad comprising:
a support portion comprising:
   a base portion having at least one aperture formed therein;
   a ring positioned on a surface of the base portion, wherein the ring bridges the at least one aperture; and
   an outer rim that radially extends outward from and surrounds the base portion; and
   a head portion having a first side comprising at least one protrusion that corresponds to the at least one aperture of the support portion, and a second side having a rounded convex surface,
   wherein the at least one protrusion extends through the corresponding aperture and encompasses a portion of the ring bridging the aperture, thereby coupling the head portion with the support portion, and wherein when coupled, the ring separates the support portion and the head portion thereby forming a waist.

The support portion can in this design couple with the head portion to form the pad. The protrusions can be pressed into the ring such that each of the protrusions encompasses a corresponding portion of the ring bridging the apertures and arranging the second side of the head portion opposite the support portion.

So when the support portion of the pad is used in a protective cover the rounded convex surface of the second side of a support portion advantageously serves to provide distance to a subjacent surface, e.g. providing distance via a protective cover wherefrom the pads protrudes as feet to a subjacent surface, e.g. a table. The support portion of a pad can e.g. be inserted via an opening at a corner of a protective cover and be kept fixed in the said opening, due to the narrow waist so that a backside of the support portion as well as the protrusions face an object, such as an electronic device, that may be supported on, or engaged with, the protective cover. Thus the pads of the present inventions protect both the subjacent surface and the surface of e.g. a protective cover that faces said subjacent surface by raising the object, whereto the pad is coupled, from a subjacent surface.

Such a pad can be easily be replaced if damaged. Further, such a pad can be coupled with e.g. a protective cover without the use of glue or other adhesives that prevents the pad from easily detaching.

The waist may have a smaller diameter than the diameters of the support portion and the head portion.

The head portion may in an expedient embodiment further comprises a groove that receives the ring of the support portion to facilitate the mutual coupling of support portion and head portion.

For example an inner ring can extend from the base portion of the support portion to be received in an inner groove of the head portion further comprises that receives the inner ring.

In order to couple the pad to e.g. a bottom cover that can rest on the suggested adjacent surface such a bottom cover may have a plurality of pad apertures, such as e.g. the openings proposed above, to provide the bottom cover with feet, preferably detachable feet.

In order to provide the bottom cover with pads the head portion of the pad is simply inserted through the plurality of pad apertures.

Optionally, in one embodiment the bottom cover comprises one or more protrusions that extend into the plurality of pad apertures, wherein the waist of the pad receives the protrusions of the bottom cover to obtain an even better assembling of a pad to a bottom cover and firm engagement due to the protrusion of the bottom cover reaching into the waist. Once the protrusions have engaged into the waist the pad is in the correct position. Emphasis is made that the pad may, if desired, still be detached from the bottom cover, but the coupling between the inner ring and the protrusions prevents the head portion and the base portion from detaching from one another.

Furthermore, the bottom cover may have receiving surfaces proximate the edge of the pad apertures for receiving the outer rim of the support portion to create an even more reliable coupling of pads to the bottom cover.

The support portion may be made of hardened thermoplastic polyurethane; and the head portion be made of softened thermoplastic polyurethane. In such an embodiment the protrusions of the head portion can be formed of softer material than the ring of the support portion, so that when heated, the protrusions of the head portion can soften to a degree such that they can be pressed into the ring such that each of the protrusions encompasses a corresponding portion of the ring bridging the apertures. Moreover the head portion may be slightly resilient which facilitates its insertion into an opening in another object.

It should be noted that these plastic materials are not mandatory and that the opposite arrangement would be possible in some embodiments.

The head portion can fused onto the support portion by plastic compounding. Alternatively the head portion can be glued to the support portion.

The present invention also relates to a cover for an electronic device comprising:
the bottom cover as described above and having a plurality of pad apertures; and
a plurality of pads as described above,
wherein the head portion extends through the pad apertures of the bottom cover.

The bottom cover may be part of a cover or encasing for an electronic device and further include a top cover.

Thus the cover of the present invention is for an electronic device.

The cover comprises: a bottom cover having a plurality of pad apertures; and a plurality of pads comprising: a support portion comprising: a base portion having at least one aperture formed therein; a ring positioned on a surface of the base portion, wherein the ring bridges the at least one aperture; and an outer ring that radially extends outward from and surrounds the base portion; and a head portion having a first side comprising at least one protrusion that corresponds to the at least one aperture of the first portion, and a second side having a rounded convex surface, wherein the at least one protrusion extends through the corresponding aperture and encompasses a portion of the ring bridging the aperture, thereby coupling the head portion with the support portion, wherein when coupled, the ring separates the support portion and the head portion thereby forming a waist, and wherein the head portion extends through the pad apertures of the bottom cover.

The features of the pad for the cover may be same as for the pad described above and accordingly the same advantages are evident and will not be repeated again in relation to the cover. A pad suited for the cover may be the previously described pad of the present invention.

Advantageous structural features of the pad for a cover and advantageous structural features of the cover with such a pad include but are not limited to the below-mentioned advantageous structural features.

The head portion may e.g. further comprise a groove that receives the ring.

The support portion may further comprise an inner ring extending from the base portion; and the head portion further comprises an inner groove that receives the inner ring.

Such an inner ring may extend around an inner portion of the body; wherein the head portion further comprises an inner protrusion that corresponds to the inner portion.

Advantageously the inner ring can also have a functional diameter smaller than a functional diameter of the ring.

The cover may be adapted so that the inner portion receives the inner protrusion.

The bottom cover may comprise one or more protrusions extending into the plurality of pad apertures, wherein the waist of the pad receives the protrusions of the bottom cover.

The bottom cover may have receiving surfaces proximate the edge of the pad apertures for the outer rim of the support portion.

The support portion may, when the head portion is inserted through the pad apertures of the bottom cover, and abuts the receiving surfaces.

The support portion may be made of hardened thermoplastic polyurethane; and the head portion is made of softened thermoplastic polyurethane.

The head portion may be fused onto the support portion by plastic compounding.

The at least one protrusion may conveniently form around the ring.

The at least one protrusion can be substantially bean-shaped to follow the curvature of the outer rim.

The protective cover further comprises a top cover, optionally the top cover is substantially rectangular.

The at least one aperture of the support portion may be formed along the outer rim of said support portion axially alignable with the protrusions of the head portion to facilitate engagement.

In a preferred embodiment the bottom cover may have four pad apertures to receive four pads so that the bottom cover can be placed firmly on a subjacent surface without scratching the support surface and without the bottom cover is placed wobbly on the subjacent support surface. An electronic device may be associated with the bottom cover. The electronic device associated with the bottom cover can e.g. be a laptop computer and the accompanying screen be associated with the top cover. In the alternative the protective cover consisting of a bottom cover with pad and an associated top cover can together be a simple case inside which the electronic device can be stored.

In an expedient embodiment the support portion can have three apertures. Similarly the head portion may have three protrusions.

In a preferred design of the cover the bottom cover is substantially rectangular.

The present invention also relates to a method for manufacturing a pad, preferably a pad for use with a protective cover, preferably a pad for use with a protective cover for an electronic devices.

The method comprises:
providing a support portion comprising:
   a base portion having at least one aperture formed therein;
   a ring positioned on a surface of the base portion, wherein the ring bridges the at least one aperture; and
   an outer rim that radially extends outward from and surrounds the base portion;
   providing a head portion having a first side comprising at least one protrusion that corresponds to the at least one aperture of the support portion, and a second side having a rounded convex surface;
   extending the at least one protrusion through the corresponding aperture in a softened state; and
   hardening the at least one protrusion to form around and encompassing the portion of the ring bridging the aperture, thereby coupling the head portion with the support portion;
   wherein when coupled, the ring separates the support portion and the head portion forming a waist.

Further steps of the method of the present invention may comprise on or more of the steps of:
providing a bottom cover having a plurality of pad apertures,
wherein the bottom cover has receiving surfaces proximate the edge of the pad apertures for the outer rim of the support portion,
inserting the head portion through the pad apertures,
wherein the receiving surfaces receive the outer rim of the support portion, or
fusing the head portion onto the support portion by plastic compounding, wherein the support portion is made of hardened thermoplastic polyurethane; and the head portion is made of softened thermoplastic polyurethane.

### BRIEF DESCRIPTION OF THE DRAWINGS

Implementations of the present application will now be described, by way of example only, with reference to the attached figures, wherein:
FIG. 1 is an isometric view of a head portion of an exemplary pad;
FIG. 2 is an isometric view of a head portion of an exemplary pad;
FIG. 3 is an isometric view of an exemplary pad;
FIG. 4 is an isometric view of the exemplary pad of FIG. 3, but viewed from a different angle;
FIG. 5 is an illustrative view of a bottom cover of an exemplary protective cover without pads installed;
FIG. 6 is an enlarged diagram of a portion of a bottom cover of an exemplary protective cover without pads installed;
FIG. 7 is an enlarged diagram of a portion of a bottom cover of an exemplary protective cover with pads installed;
FIG. 8 is an isometric view of an exemplary protective cover with pads installed; and
FIG. 9 is a flow chart illustrating a method for manufacturing a pad.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, the embodiments described herein can be practiced without these specific details. In other instances, methods, procedures and components have not been described in detail so as not to obscure the related relevant function being described. Also, the description is not to be considered as limiting the scope of the implementations described herein. It will be understood that descriptions and characterizations of embodiments set forth in this disclosure are not to be considered as mutually exclusive, unless otherwise noted.

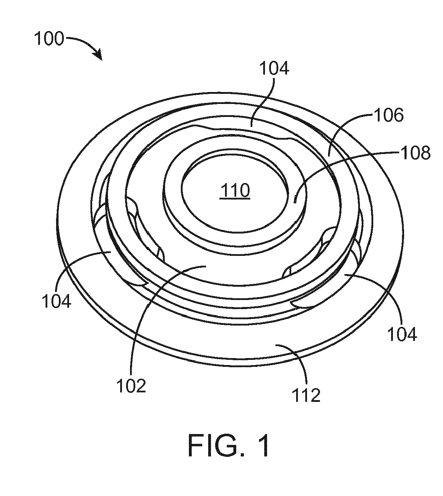

FIG. 1 illustrates a support portion 100 of a pad. The support portion 100 includes a base portion 102. The base portion 102 has a convex surface. In other examples, the base portion 102 can have a flat surface, a concave surface, or an irregular surface. The base portion 102 can be substantially circular, rectangular, or any other suitable shape. The base portion 102 of the support portion 100 can be made of at least hardened thermoplastic polyurethane. In other examples, the base portion 102 of the support portion 100 can be made of any suitable polymer.

The support portion 100 has an outer rim 112 that radially extends outward from the base portion 102. In at least one example, the outer rim 112 can extend uniformly from the base portion 102. In other examples, the outer rim 112 can extend from the base portion 102 varying distances. The outer rim 112 can be made of at least hardened thermoplastic polyurethane or any suitable polymer. In at least one example, the outer rim 112 can be made of the same material as the base portion 102. In other examples, the outer rim 112 can be made of a different material than the base portion 102. The outer rim 112 has a convex surface. In other examples, the outer rim 112 can have a flat, concave, or irregular surface.

The support portion 100 has at least one aperture 104 formed between the base portion 102 and the outer rim 112. The support portion 100 can have one, two, or any suitable number of apertures 104 formed between the base portion 102 and the outer rim 112. The apertures 104 can be substantially bean-shaped, circular, ovoid, rectangular, or any other suitable shape. Although having such shapes, the apertures 104 can be slightly arcuate to conform to a general circular shape of the support portion 100 or outer rim 112.

A ring 106 extends around a surface of the base portion 102. In other examples, the ring 106 can be positioned on the surface of the base portion 102. In yet other examples, the ring 106 can extend from the base portion 102 such that the ring 106 protrudes above the surface of the base portion 102. In yet other examples, the ring 106 is above but separate from the surface of the base portion 102. The ring 106 bridges the apertures 104. In other examples, the ring 106 does not bridge the apertures 104. In yet other examples, the ring 106 bridges at least one, but not all, of the apertures 104. The ring 106 can be substantially circular, rectangular, ovoid, or any other suitable shape and can conform to the general shape of the base portion 100. The ring 106 can be made of hardened thermoplastic polyurethane, rubber, or any other suitable polymer. In at least one example, the ring 106 can be made of the same material as the base portion 102. In other examples, the ring 106 can be made of a different material than the base portion 102.

The base portion 102 has an inner ring 108 extending from the surface of the base portion 102. The inner ring 108 is smaller in functional diameter than the ring 106. The inner ring 108 forms a raised perimeter and extends around an inner portion 110 of the base portion 102. The inner portion 110 can substantially coincide with the central area of the base portion 102. In other examples, the inner ring 108 extends from the surface of the base portion 102 at any location but is contained within the ring 106. The inner ring 108 can be substantially circular, rectangular, ovoid, or any other suitable shape. The inner ring 108 can be made of hardened thermoplastic polyurethane, rubber, or any other suitable polymer. In at least one example, the inner ring 108 can be made of the same material as the base portion 102. In other examples, the inner ring 108 can be made of a different material than the base portion 102.

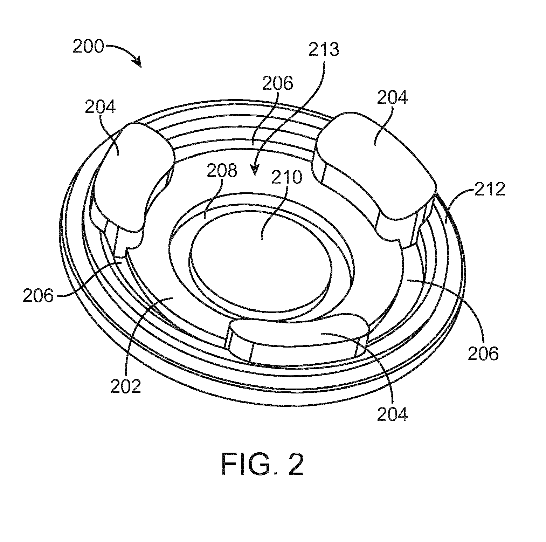

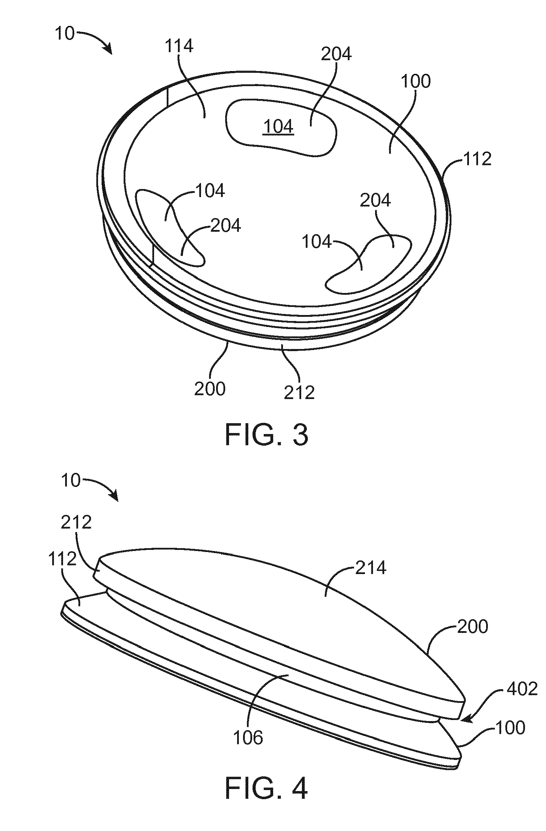

FIG. 2 illustrates a head portion 200 of the pad 10 (see FIG. 4). The head portion 200 is substantially circular, but, in other examples, can be rectangular, ovoid, or any other suitable shape. The head portion 200 has a body 202 having an underside 213 that includes at least one protrusion 204. The protrusions 204 can be substantially bean-shaped, circular, ovoid, rectangular, or any other suitable shape. Although having such shapes, the protrusions 204 can be slightly arcuate to conform to a general circular shape of the head portion 200. The protrusions 204 can correspond in number and in shape to the apertures 104 of the support portion 100 (shown in FIG. 1). In other examples, the protrusions 204 can be positioned such that the protrusions 204 correspond to portions of the ring 106.

The underside 213 of the head portion 200 can have a concave surface. In other examples, the underside 213 can have a convex, flat, or irregular surface. The underside 213 of the head portion 200 can correspond to the base portion 102 of the support portion 100 (shown in FIG. 1). The body 202 can be made of softened thermoplastic polyurethane, rubber, or any other suitable polymer. In at least one example, the body 202 can be made of the same material as the protrusions 204. In other examples, the body 202 can be made of a different material than the protrusions 204.

The body 202 of the head portion 200 can have an outer perimeter portion 212. The outer perimeter portion 212 can be substantially circular, rectangular, or any other suitable shape. The outer perimeter portion 212 can be made of softened thermoplastic polyurethane, rubber, or any other suitable polymer. In at least one example, the outer perimeter portion 212 can be made of the same material as the remainder of the body 202. In other examples, the outer perimeter portion 212 can be made of a different material than the remainder of the body 202. The outer perimeter portion 212 portion has a chamfered edge. In other examples, the outer perimeter portion 212 can have a beveled, a straight, or any suitably shaped edge. The head portion 200 can have a diameter smaller than a diameter of the support portion 100.

A groove 206 is formed in the body 202 separating the first underside 213 from the outer perimeter 212. The groove 206 is substantially circular. In other examples, the groove 206 can be substantially rectangular, ovoid, or any suitable shape. The groove 206 corresponds to the ring 106 of the support portion 100 (shown in FIG. 1) such that the groove 206 can receive the ring 106. The protrusions 204 extend from the groove 206 as well as the underside 213 of the body 202. In other examples, the protrusions 204 extend only from the underside 213 of the body 202 and are raised above the groove 206.

The underside 213 of the body 202 of the head portion 200 includes an inner protrusion 210. The inner protrusion 210 corresponds to the inner portion 110 of the support portion 100 (shown in FIG. 1). The inner protrusion 210 can be substantially circular, rectangular, or any suitable shape such that the inner portion 110 formed by the inner ring 108 of the support portion (shown in FIG. 1) receives the inner protrusion 210. The inner protrusion 210 and the underside 213 of the body 202 form an inner groove 208 between inner protrusion 210 and underside 213. The inner groove 208 is substantially circular. In other examples, the inner groove 208 can be substantially rectangular, ovoid, or any other suitable shape. The inner groove 208 corresponds to the inner ring 108 of the support portion 100 (shown in FIG. 1) such that the inner groove 208 can receive the inner ring 108.

The support portion 100 can couple with the head portion 200 to form the pad 10 as shown in FIG. 3. Because the protrusions 204 of the head portion 200 are formed of softer material than the ring 106 of the support portion 100, when heated, the protrusions 204 of the head portion 200 can soften to a degree such that they can be pressed into the ring 106 such that each of the protrusions 204 encompasses a corresponding portion of the ring 106 bridging the apertures 104. In at least one example, the protrusions 204 of the head portion 200 then cool and solidify, forming around the encompassed portions of the ring 106. The protrusions 204 can be urged and received by the corresponding apertures 104, and correspondingly, the ring 106 can be urged and received by the groove 206. The inner ring 108 is received by the inner groove 208. In at least one example, the support portion 100 does not include an inner ring 108. The head portion 200 can be fused onto the support portion 100 by plastic compounding. In other examples, the head portion 200 can be coupled with the support portion 100 by any suitable means. The support portion 100 has a back side 114 that is a rounded concave surface.

When the pad 10 is formed, the outer rim 112 and the outer perimeter portion 212 do not contact one another, as illustrated in FIG. 4. When coupled, the ring 106 separates the support portion 100 and the head portion 200, thereby forming a waist 402. The waist 402 has a smaller diameter than the diameters of the support portion 100 and the head portion 200. The head portion 200 has a second side 214 which is a rounded convex surface. In other examples, the second side 214 can be convex, flat, or irregular in shape.

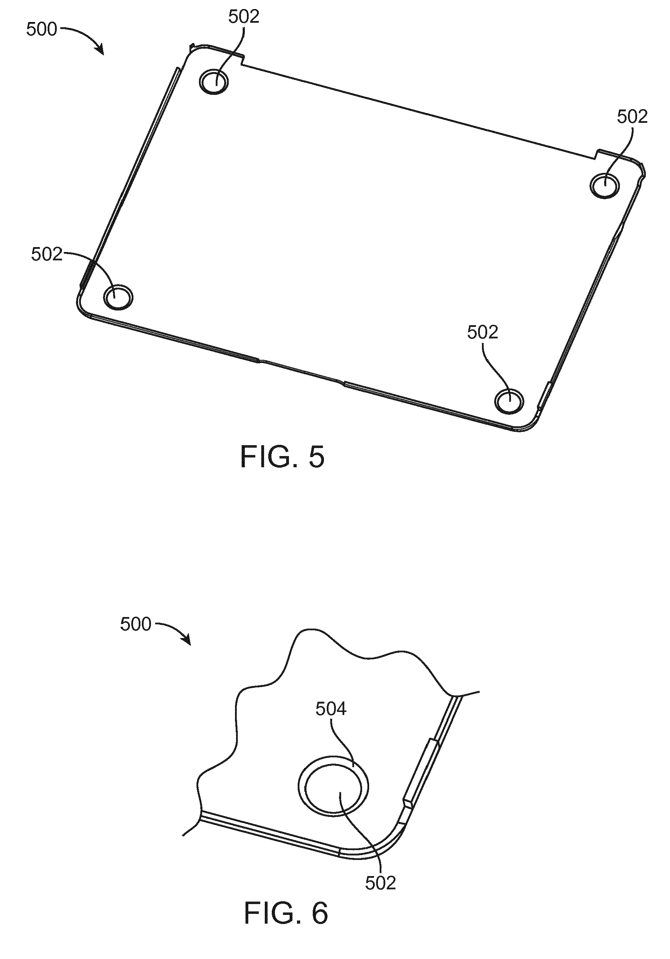

FIG. 5 illustrates a bottom cover 500 of a protective cover for an electronic device. The bottom cover 500 corresponds to the underside of an electronic device, for example a laptop computer, and protects the underside of the electronic device at least from surface damage. The bottom cover 500 can be substantially rectangular. In other examples, the bottom cover can be substantially circular, ovoid, or any suitable shape that substantially corresponds to the underside of the electronic device. The bottom cover 500 has at least one pad aperture 502 formed therein. In at least one embodiment, the bottom cover 500 has four pad apertures 502 formed therein.

The bottom cover 500 has one or more protrusions 504 that extend into the plurality of pad apertures 502 as shown in FIG. 6. In at least one example, the protrusions 504 can be one continuous extension. In other examples, there can be multiple protrusions 504 that extend throughout the pad apertures 502. The protrusions 504 correspond to the waist 402 of the pad 10.

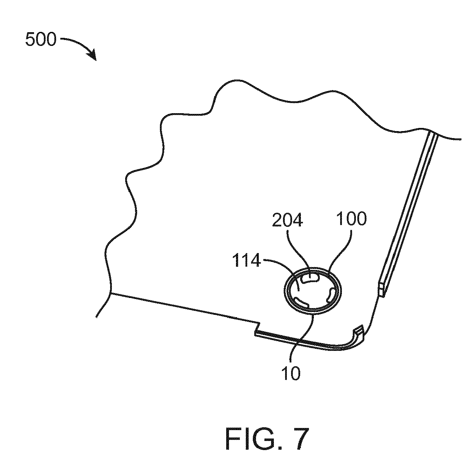

As shown in FIG. 7, the pad 10 is inserted through the pad apertures 502. To insert the pad 10, the head portion 100 of the pad 10 (shown in FIG. 4) is inserted through the pad apertures 502 (shown in FIG. 6) of the bottom cover 500. The protrusions 504 of the bottom cover 500 (shown in FIG. 6) can function as receiving surfaces proximate the edge of the pad apertures 502 for the outer rim 112 of the support portion 100. The waist 402 receives the protrusions 504, and the outer rim 112 abuts the protrusions 504, thereby coupling the pad 10 to the bottom cover 500. When being inserted through the pad apertures 502, the head portion 200 deforms against the protrusions 504. When through the pad apertures 502, the head portion 200 reforms wherein the diameter of the head portion 100 is greater than the diameter of the pad apertures 502. As such, the outer perimeter portion 212 of the head portion 200 abuts the protrusions 504, thereby coupling the pad 10 to the bottom cover 500.

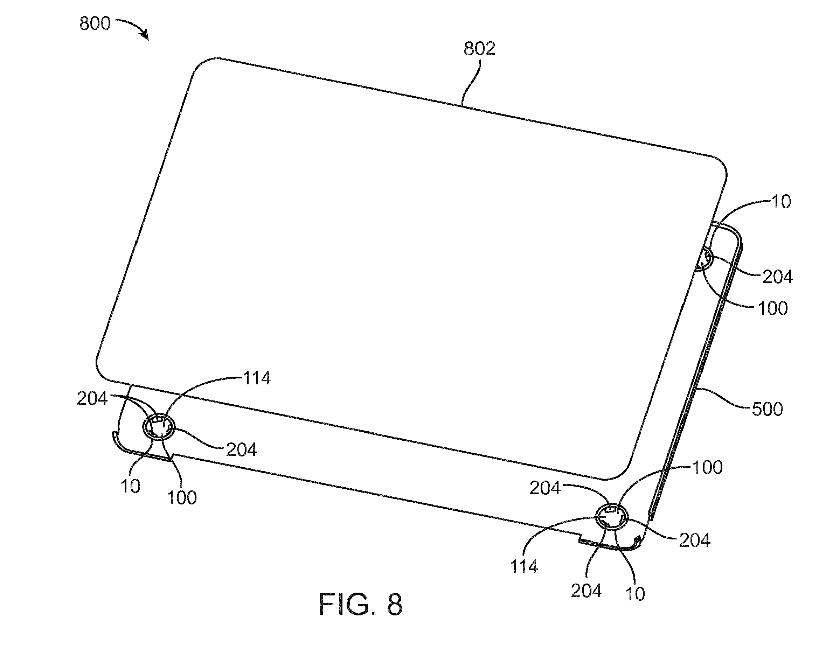

FIG. 8 illustrates that the protective cover 800 includes a top cover 802 and a bottom cover 500. The top cover 802 corresponds to a top outer surface of the electronic device, which may be for example a laptop device. The top cover 802 is substantially rectangular. In other examples, the top cover 802 can be substantially circular, ovoid, or any suitable shape corresponding to the electronic device. The bottom cover 500 is coupled with at least one pad 10. The second side 214 of the upper head portion 200 is on the outer side of the back cover 500. The back side 114 of the support portion 100 forms the opposite side of the pad 10 and is on the inner side of the back cover 500 such that the back side 114 is proximate to the electronic device.

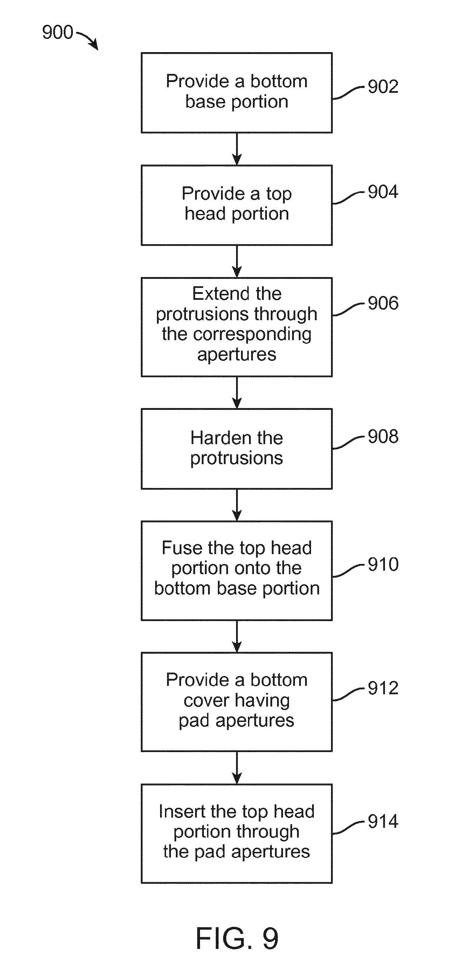

Referring to FIG. 9, a flowchart for manufacturing a pad is presented in accordance with an example embodiment. The example method 900 is provided by way of example, as there are a variety of ways to carry out the method. The method 900 described below can be carried out using the configurations illustrated in FIGS. 1-3, for example, and various elements of these figures are referenced in explaining example method 900. Each block shown in FIG. 9 represents one or more processes, methods or subroutines, carried out in the example method 900. Furthermore, the illustrated order of blocks is illustrative only and the order of the blocks can change according to the present disclosure. Additional blocks may be added or fewer blocks may be utilized, without departing from this disclosure. The example method 900 can begin at block 902.

At block 902, a support portion is provided. The support portion has a base portion having at least one aperture formed therein. The support portion is circular. In other examples, the support portion can be rectangular, ovoid, or any other suitable shape. The apertures can be bean-shaped, circular, rectangular, or any other suitable shape. A ring extends around a surface of the base portion. The ring bridges the apertures. An outer rim radially extends outward from the base portion. The support portion can be made of hardened thermoplastic polyurethane. In other examples, the support portion can be made of any other suitable material.

At block 904, a head portion is provided. The head portion has a first side which includes at least one protrusion that corresponds to the apertures of the support portion. The head portion has a second side having a rounded convex surface. The head portion can be made of softened thermoplastic polyurethane. In other examples, the head portion can be made of any other suitable material that is softer than the material of the support portion. In yet other examples, the head portion can be made of any other suitable material that has a lower melting point than the material of the support portion.

At block 906, the protrusions are extended through the corresponding apertures. The protrusions can be in a softened state. In other examples, the protrusions can be in a melted stated.

At block 908, the protrusions are hardened to form around and encompass the portion of the ring bridging the aperture, thereby coupling the head portion with the support portion.

At block 910, the head portion is fused onto the support portion by plastic compounding. In other examples, the head portion is coupled with the support portion by welding, extrusion, or any other suitable means. When coupled, the ring separates the support portion and the head portion forming a waist.

At block 912, a bottom cover is provided. The bottom cover has a plurality of pad apertures. In at least one example, the bottom cover has four pad apertures. The bottom cover can have receiving surfaces proximate the edge of the pad apertures for the outer rim of the support portion.

At block 914, the head portion is inserted through the pad apertures. The receiving surfaces receive the outer rim of the support portion such that the outer rim abuts the receiving surfaces. In other examples, the bottom cover has protrusions that extend into the pad apertures which are received, when the head portion is inserted through the pad apertures, by the waist of the pad.

The various embodiments described above are provided by way of illustration only and should not be construed to limit the scope of the disclosure. Various modifications and changes can be made to the principles and embodiments described herein without departing from the scope of the disclosure and without departing from the claims which follow.

## Claims

1. A pad (10) comprising:
a support portion (100) comprising:
a base portion (102) having at least one aperture (104) formed therein;
a ring (106) positioned on a surface of the base portion, wherein the ring (106) bridges the at least one aperture (104) ; and
an outer rim (112) that radially extends outward from and surrounds the base portion (102); and
a head portion (200) having a first side (213) comprising at least one protrusion (204) that corresponds to the at least one aperture (104) of the support portion (104), and a second side (214) having a rounded convex surface,
wherein the at least one protrusion (204) extends through the corresponding aperture (104) and encompasses a portion of the ring (106) bridging the aperture, thereby coupling the head portion (200) with the support portion (100), and wherein when coupled, the ring (106) separates the support portion (100) and the head portion (200) thereby forming a waist (402).

2. The pad (10) according to claim 1, wherein the head portion (200) further comprises a groove (206) that receives the ring (106).

3. The pad (10) according to any of claims 1 or 2, wherein the support portion (100) further comprises an inner ring (108) extending from the base portion (102); and the head portion (200) further comprises an inner groove (208) that receives the inner ring (108).

4. The pad (10) according to any of claims 1, 2 or 3, wherein the pad (10) is coupled with a bottom cover (500) having a plurality of pad apertures (502).

5. The pad (10) according to claim 4, wherein the head portion (200) of the pad (10) is inserted through the plurality of pad apertures (502) of the bottom cover (500).

6. The pad (10) according to claims 4 or 5, wherein the bottom cover (500) comprises one or more protrusions (504) that extend into the plurality of pad apertures (502), wherein the waist (402) of the pad (10) receives the protrusions (504) of the bottom cover (500).

7. The pad (10) according to any of claims 4, 5 or 6, wherein the bottom cover (500) has receiving surfaces proximate the edge of the pad apertures (502) for receiving the outer rim of (112) the support portion (100).

8. The pad (10) according to any of the preceding claims 1 - 7, wherein the support portion (100) is made of hardened thermoplastic polyurethane; and the head portion (200) is made of softened thermoplastic polyurethane.

9. The pad (10) according to any of the preceding claims 1 - 8, wherein the head portion (200) is fused onto the support portion (100) by plastic compounding.

10. A cover (800) for an electronic device comprising:
the bottom cover (500) as defined in any of claims 4 - 7 and a plurality of pads (10) according to any of the preceding claims 1 - 9, wherein the head portion (200) extends through the pad apertures (502) of the bottom cover (500).

11. A method for manufacturing a pad comprising:
providing a support portion comprising:
a base portion having at least one aperture formed therein;
a ring positioned on a surface of the base portion, wherein the ring bridges the at least one aperture; and
an outer rim that radially extends outward from and surrounds the base portion;
providing a head portion having a first side comprising at least one protrusion that corresponds to the at least one aperture of the support portion, and a second side having a rounded convex surface;
extending the at least one protrusion through the corresponding aperture in a softened state; and
hardening the at least one protrusion to form around and encompassing the portion of the ring bridging the aperture, thereby coupling the head portion with the support portion;
wherein when coupled, the ring separates the support portion and the head portion forming a waist.

12. The method according to claim 11, further comprising:
providing a bottom cover having a plurality of pad apertures, wherein the bottom cover has receiving surfaces proximate the edge of the pad apertures for the outer rim of the support portion.

13. The method according to any of claim 11 or 12, further comprising:
inserting the head portion through the pad apertures,
wherein the receiving surfaces receive the outer rim of the support portion.

14. The method according to any of claims 11, 12 or 13, further comprising:
fusing the head portion onto the support portion by plastic compounding,
wherein the support portion is made of hardened thermoplastic polyurethane; and the head portion is made of softened thermoplastic polyurethane.

15. Use of the pad (10) according to any of the preceding claims 1 - 9 together with a bottom cover (500) in a protective cover (800) for an electronic device.
